# EUROPÄISCHE PATENTSCHRIFT

(11) **EP 2 180 372 B1**
(45) Veröffentlichungstag und Bekanntmachung des Hinweises auf die Patenterteilung: **29.08.2012**
(21) Anmeldenummer: 08167133.1
(22) Anmeldetag: 21.10.2008
(51) Int. Cl.: G03B 42/04

(54) **Aufnahmevorrichtung zum Aufnehmen einer Speicherleuchtstoffplatte und Röntgenkassette**
Loading device to take on a fluorescent storage sheet and x-ray cassette
Dispositif de réception destiné à la réception d'un disque fluorescent de mémoire et cassette radiographique

(43) Veröffentlichungstag der Anmeldung: 28.04.2010
(73) Patentinhaber: Agfa HealthCare NV, 2640 Mortsel (BE)
(72) Erfinder: Pirmann, Anton, 81243, München (DE)
(74) Vertreter: Linsmeier, Josef

(56) Entgegenhaltungen:
- JP-A- 2000 039 683
- JP-A- 2002 182 322
- US-A- 3 286 092
- US-A1- 2005 169 433

## Beschreibung

Die vorliegende Erfindung betrifft eine Aufnahmevorrichtung zum Aufnehmen einer Speicherleuchtstoffplatte, die eine Speicherleuchtstoffschicht zum Speichern von Röntgeninformationen umfasst, und eine Röntgenkassette mit einer solchen Aufnahmevorrichtung.

In der Radiografie wird für diagnostische Zwecke von einem Objekt mittels Röntgenbestrahlung ein Bild erzeugt, das in einer Speicherleuchtstoffschicht als latentes Röntgenbild abgespeichert wird. Ein solches Röntgenbild enthält somit Bildinformationen über das Objekt. Die Aufnahme von Röntgenbildern wird insbesondere im medizinischen Bereich und im Bereich der zerstörungsfreien Prüfung (non-destructive testing, NDT) von Objekten, wie z. B. einer Schweißnaht, eingesetzt. Zum Auslesen der in der Speicherleuchtstoffschicht abgespeicherten Bildinformationen wird die Speicherleuchtstoffschicht in einer Auslesevorrichtung mittels einer Bestrahlungseinrichtung angeregt. Die Speicherleuchtstoffschicht emittiert aufgrund dieser Anregung Emissionsstrahlung, die eine Intensität entsprechend der Menge der in der Speicherleuchtstoffschicht abgespeicherten Bildinformationen des Röntgenbildes aufweist. Die von der Speicherleuchtstoffschicht ausgesandte Emissionsstrahlung wird von einem Detektor erfasst und in elektrische Signale gewandelt, die ein Abbild der Bildinformationen enthalten. Die elektrischen Signale werden weiterverarbeitet und die in der Speicherleuchtstoffschicht abgespeicherten Bildinformationen anschließend sichtbar gemacht. Die Bildinformationen können zur weiteren Auswertung beispielsweise direkt auf einem Monitor dargestellt oder mittels eines speziell für Röntgenbilder verwendbaren Druckers auf einen fotografischen Röntgenfilm geschrieben werden.

Die Speicherleuchtstoffschicht ist auf einer Trägerschicht aufgebracht, die zusammen eine Speicherleuchtstoffplatte bilden. Die Speicherleuchtstoffplatte befindet sich zur Handhabung üblicherweise geschützt in einer Röntgenkassette, die zum Auslesen der in der Speicherleuchtstoffschicht abgespeicherten Bildinformationen in die Auslesevorrichtung eingeführt wird. Die Speicherleuchtstoffplatte wird in der Auslesevorrichtung aus der Röntgenkassette entnommen. Dazu weist die Röntgenkassette eine Öffnung auf, durch welche die in der Röntgenkassette befindliche Speicherleuchtstoffplatte aus der Röntgenkassette heraus und die außerhalb der Röntgenkassette befindliche Speicherleuchtstoffplatte in die Röntgenkassette hinein befördert werden kann.

Röntgenkassetten und dazugehörige Speicherleuchtstoffplatten haben üblicherweise Maße, die aneinander angepasst sind, um ein problemloses Ein- und Ausführen der Speicherleuchtstoffplatte sowie ein sicheres Lagern der Speicherleuchtstoffplatte in der Röntgenkassette zu gewährleisten. Für bestimmte Anwendungen, insbesondere im Bereich der zerstörungsfreien Materialprüfung sowie bei zahnmedizinischen Anwendungen, kann es jedoch erforderlich sein, Speicherleuchtstoffplatten einzusetzen, deren Geometrie und Maße von den üblicherweise eingesetzten abweichen. Dies kann beispielsweise aufgrund der besonderen Geometrie und der Maße des Objekts der Fall sein, von dem ein Röntgenbild aufgenommen werden soll.

JP 2002-182322 A zeigt eine Speicherleuchtstoffplatte, bei welcher im Umfangsbereich des Substrates Vorsprünge vorgesehen sind. Die Speicherleuchtstoffplatte kann in einem rahmenartigen Halter aufgenommen werden, wobei die Vorsprünge in entsprechende Einschubbereiche des Halters eingreifen. Aus

JP 2000-039683 A ist eine Röntgenkassette mit zwei Öffnungen bekannt, die durch Klappen verschlossen bzw. geöffnet werden können.

Es ist die Aufgabe der vorliegenden Erfindung, ein komfortables und sicheres Aufnehmen einer Speicherleuchtstoffplatte in einer Röntgenkassette zu ermöglichen.

Diese Aufgabe wird gemäß der technischen Lehre des Anspruchs 1 oder des Anspruchs 11 gelöst.

Die erfindungsgemäße Aufnahmevorrichtung weist eine Abdeckplatte mit einer ersten Aussparung sowie eine Grundplatte auf, welche von der Abdeckplatte beabstandet ist, so dass zwischen der Grundplatte und der Abdeckplatte ein Aufnahmeraum zum Aufnehmen der Speicherleuchtstoffplatte vorhanden ist. Die Speicherleuchtstoffplatte wird dabei im Aufnahmeraum zwischen der Abdeckplatte und der Grundplatte gehalten und die erste Aussparung der Abdeckplatte befindet sich bei aufgenommener Speicherleuchtstoffplatte über der Oberfläche der Speicherleuchtstoffschicht der aufgenommenen Speicherleuchtstoffplatte. Die erfindungsgemäße Röntgenkassette weist eine solche erfindungsgemäße Aufnahmevorrichtung auf.

Aufgrund der vorliegenden Erfindung ist es möglich, die erste Aussparung und den Aufnahmeraum so auszugestalten, dass Speicherleuchtstoffplatten von weitgehend beliebiger Größe und Geometrie von der Aufnahmevorrichtung aufgenommen werden können. Die erste Aussparung und der Aufnahmeraum sind dabei vorteilhafterweise an die Form der Speicherleuchtstoffplatte angepasst, so dass die Speicherleuchtstoffplatte in der Aufnahmevorrichtung sicher gehalten und genau positioniert werden kann. Da die Maße der Aufnahmevorrichtung und die Ausgestaltung der Röntgenkassette, insbesondere deren Inneres, vorteilhafterweise aufeinander abgestimmt sind, wird auch die Aufnahmevorrichtung innerhalb der Röntgenkassette sicher gehalten und positioniert. Die Erfindung ermöglicht es somit, dass Speicherleuchtstoffplatten weitgehend beliebiger Größe und Geometrie von einer herkömmlichen Röntgenkassette aufgenommen und sicher in ihr gehalten werden können. Die Aufnahmevorrichtung stellt hierbei eine Art Schablone dar, die eine Aussparung für die Oberfläche der Speicherleuchtstoffschicht aufweist. Die Abdeckplatte ist insbesondere rahmenförmig ausgestaltet. Da sich die erste Aussparung erfindungsgemäß über der Oberfläche der Speicherleuchtstoffschicht der gehaltenen Speicherleuchtstoffplatte befindet, ist die Oberfläche der Speicherleuchtstoffschicht vorteilhafterweise im Wesentlichen von der Abdeckplatte freigehalten. Dadurch kann bei einem Auslesen der in der Speicherleuchtstoffschicht gespeicherten Röntgeninformationen in einer Auslesevorrichtung vorteilhafterweise eine Anregungsstrahlung unmittelbar auf die Speicherleuchtstoffschicht treffen und die aufgrund der Anregung von der Speicherleuchtstoffschicht emittierte Emissionsstrahlung sicher und frei von Hindernissen in Richtung eines Detektors zum Erfassen der Emissionsstrahlung ausgegeben werden. Das Auslesen der Röntgeninformationen aus der in der Aufnahmevorrichtung gehaltenen Speicherleuchtstoffschicht wird daher durch die Aufnahmevorrichtung nicht behindert.

In einer vorteilhaften Ausgestaltung der Erfindung ist zwischen der Abdeckplatte und der Grundplatte ein schienenförmiger Leerraum zum Aufnehmen eines Randbereichs der Speicherleuchtstoffplatte vorhanden. In diesem schienenförmigen Leerraum kann die Speicherleuchtstoffplatte somit in ihrem Randbereich einfachheitshalber sicher in der Aufnahmevorrichtung gehalten werden. Der schienenförmige Leerraum ist vorteilhafterweise entlang einander gegenüberliegender Seitenlängen der ersten Aussparung ausgebildet. Über den schienenförmigen Leerraum kann die Speicherleuchtstoffplatte einfach in die Aufnahmevorrichtung eingeführt und aus ihr entnommen werden.

In einer weiteren vorteilhaften Ausgestaltung ist in der Abdeckplatte eine zweite Aussparung vorhanden, die an die erste Aussparung der Abdeckplatte angrenzt. Diese zweite Aussparung dient vorteilhafterweise zum bequemen Einführen der Speicherleuchtstoffplatte in und zum bequemen Entnehmen der Speicherleuchtstoffplatte aus dem Aufnahmeraum. Die zweite Aussparung kann vorteilhafterweise teilkreisförmig, insbesondere halbkreisförmig, sein. Die zweite Aussparung ist vorteilhafterweise kleiner als die erste Aussparung.

In einer besonders bevorzugten Ausgestaltung der Erfindung ist in der Grundplatte eine dritte Aussparung vorhanden, die sich unterhalb der zweiten Aussparung der Abdeckplatte befindet. Dadurch entsteht ein Durchgang durch die Aufnahmevorrichtung, d. h. durch die Abdeckplatte und die Grundplatte. Dieser Durchgang ermöglicht ein besonders bequemes Einführen und Entnehmen der Speicherleuchtstoffplatte. Die dritte Aussparung ist vorteilhafterweise in Größe und Form an die zweite Aussparung angepasst. Insbesondere können die zweite und die dritte Aussparung eine gleiche Größe und Form haben.

Besonders vorteilhaft ist in der Abdeckplatte eine vierte Aussparung vorhanden, die an die erste Aussparung der Abdeckplatte angrenzt und der zweiten Aussparung gegenüberliegt. Diese vierte Aussparung dient vorteilhafterweise ebenfalls dem bequemen Einführen der Speicherleuchtstoffplatte in und dem bequemen Entnehmen der Speicherleuchtstoffplatte aus dem Aufnahmeraum. Die vierte Aussparung kann vorteilhafterweise teilkreisförmig, insbesondere halbkreisförmig, sein. Die vierte Aussparung ist vorteilhafterweise kleiner als die erste Aussparung. Des Weiteren vorteilhaft hat die vierte Aussparung die gleiche Form und Größe wie die zweite Aussparung. Die vierte Aussparung liegt der zweiten Aussparung so gegenüber, dass sich die erste Aussparung zwischen der zweiten und der vierten Aussparung befindet.

Bevorzugt ist in der Grundplatte eine fünfte Aussparung vorhanden, die sich unterhalb der vierten Aussparung der Abdeckplatte befindet. Dadurch entsteht ein weiterer Durchgang durch die Aufnahmevorrichtung, d. h. durch die Abdeckplatte und die Grundplatte. Dieser weitere Durchgang liegt dem durch die zweite und dritte Aussparung gebildeten Durchgang gegenüber und ermöglicht ein noch bequemeres Einführen und Entnehmen der Speicherleuchtstoffplatte. Die fünfte Aussparung ist vorteilhafterweise in Größe und Form an die vierte Aussparung angepasst. Insbesondere können die vierte und die fünfte Aussparung eine gleiche Größe und Form haben.

Erfindungsgemäß ist in der Grundplatte eine sechste Aussparung zum Zuführen der Speicherleuchtstoffplatte zu und zum Entnehmen der Speicherleuchtstoffplatte aus dem Aufnahmeraum vorhanden. Durch die sechste Aussparung kann die Speicherleuchtstoffplatte einfach und komfortabel in den Aufnahmeraum eingeführt und aus dem Aufnahmeraum entnommen werden. Die sechste Aussparung mündet vorteilhafterweise in den Aufnahmeraum. Insbesondere ist sie dem Aufnahmeraum unmittelbar benachbart.

In einer vorteilhaften Ausgestaltung der Erfindung grenzt die sechste Aussparung an die fünfte Aussparung an. Durch diese Ausgestaltung kann die Speicherleuchtstoffplatte besonders einfach und komfortabel in den Aufnahmeraum eingeführt und aus dem Aufnahmeraum entnommen werden. Die fünfte und die sechste Aussparung gehen vorteilhafterweise ineinander über.

Vorzugsweise ist die Aufnahmevorrichtung aus einem flexiblen Material, insbesondere einem flexiblen Kunststoffmaterial, hergestellt. Dies ist für die Handhabung der Aufnahmevorrichtung beispielsweise in einer Auslesevorrichtung zum Auslesen der in der Speicherleuchtstoffschicht gespeicherten Röntgeninformationen vorteilhaft. Vorteilhafterweise ist die Aufnahmevorrichtung somit biegbar, beispielsweise zu ihrer Handhabung.

In einer weiteren vorteilhaften Ausgestaltung ist die Aufnahmevorrichtung zum Aufnehmen von mehreren Speicherleuchtstoffplatten ausgestaltet, wobei zwischen der Grundplatte und der Abdeckplatte mehrere Aufnahmeräume zum Aufnehmen der Speicherleuchtstoffplatten vorhanden sind. Die Abdeckplatte weist mehrere erste Aussparungen auf, welche sich über den Oberflächen der Speicherleuchtstoffschichten der aufgenommenen Speicherleuchtstoffplatten befinden. Durch diese Ausgestaltung der Aufnahmevorrichtung können vorteilhafterweise hafterweise mehrere Speicherleuchtstoffplatten, die unterschiedliche Formate aufweisen können, gleichzeitig aufgenommen und ggf. verarbeitet werden. Dies gewährleistet vorteilhafterweise eine kurze Verarbeitungszeit der mehreren Speicherleuchtstoffplatten.

In einer besonders bevorzugten Ausgestaltung der Erfindung weist die Röntgenkassette zwei verschließbare Öffnungen auf, durch die die Aufnahmevorrichtung in die Röntgenkassette einführbar und die in der Röntgenkassette befindliche Aufnahmevorrichtung aus der Röntgenkassette herausnehmbar ist. Dadurch wird die Handhabung der Röntgenkassette und/oder der Aufnahmevorrichtung besonders einfach. Beispielsweise ist es möglich, dass eine Bedienperson die Aufnahmevorrichtung durch eine der Öffnungen aus der Röntgenkassette entnimmt oder in die Röntgenkassette einführt, während die Röntgenkassette mit der anderen Öffnung in einer Auslesevorrichtung zum Auslesen der in der Speicherleuchtstoffschicht gespeicherten Röntgeninformationen steckt. Dadurch wird eine gute Bedienerfreundlichkeit gewährleistet.

Besonders vorteilhaft ist die eine der Öffnungen an einer Frontfläche der Röntgenkassette und die andere der Öffnungen an einer Deckelfläche der Röntgenkassette ausgebildet. Vorteilhafterweise ist die Öffnung an der Frontseite besonders für eine maschinelle Entnahmeeinrichtung beispielsweise einer Auslesevorrichtung zum Auslesen der in der Speicherleuchtstoffschicht der Speicherleuchtstoffplatte gespeicherten Röntgeninformationen geeignet. Die Öffnung an der Deckelfläche ist dann vorteilhafterweise für eine Bedienperson zum Zuführen und Entnehmen der Speicherleuchtstoffplatte geeignet. Die Bedienperson erhält dadurch einen bequemen und einfachen Zugang zum Innern der Röntgenkassette.

Weitere Vorteile der Erfindung ergeben sich aus der folgenden Beschreibung von Ausführungsbeispielen, wobei Bezug auf die beigefügten Zeichnungen genommen wird. Es zeigen:
- Fig. 1: eine schematische Darstellung eines Ausführungsbeispiels eines Systems mit einer Röntgenkassette, die eine Öffnung aufweist, und einer Auslesevorrichtung zum Auslesen einer Speicherleuchtstoffplatte,
- Fig. 2: eine schematische Darstellung eines Ausführungsbeispiels eines Systems mit einer Röntgenkassette, die zwei Öffnungen aufweist, und der Auslesevorrichtung zum Auslesen einer Speicherleuchtstoffplatte,
- Fig. 3: eine schematische Darstellung eines Ausführungsbeispiels einer Röntgenkassette mit einem abnehmbaren Deckelteil als Verschluss für eine ihrer Öffnungen,
- Fig. 4: eine schematische Darstellung eines Schnitts durch die Röntgenkassette nach Fig. 3,
- Fig. 5A, B: schematische Darstellungen einer Verschlussfeder zum Verschließen des abnehmbaren Deckelteils der Röntgenkassette nach Fig. 3,
- Fig. 6A, B: schematische Darstellungen eines Ausführungsbeispiels einer Röntgenkassette mit einem verschiebbaren Deckelteil als Verschluss für eine ihrer Öffnungen,
- Fig. 7A, B: schematische Darstellungen eines Ausführungsbeispiels einer Röntgenkassette mit einem verschwenkbaren Deckelteil als Verschluss für eine ihrer Öffnungen,
- Fig. 8: eine schematische Darstellung einer Draufsicht auf ein Ausführungsbeispiel einer Aufnahmevorrichtung mit mehreren Aufnahmeräumen für symmetrische Speicherleuchtstoffplatten,
- Fig. 9: eine schematische Darstellung eines Querschnitts der Aufnahmevorrichtung nach Fig. 8,
- Fig. 10A, B: schematische Darstellungen von perspektivischen Ansichten der Aufnahmevorrichtung nach Fig. 8 ohne bzw. mit aufgenommenen Speicherleuchtstoffplatten und
- Fig. 11: eine weitere schematische Darstellung der Röntgenkassette nach Fig. 3 mit einer in ihrem Innern befindlichen Aufnahmevorrichtung nach Fig. 8,
- Fig. 12: eine schematische Darstellung einer Draufsicht auf ein Ausführungsbeispiel einer Aufnahmevorrichtung mit einem einzigen Aufnahmeraum für eine asymmetrische Speicherleuchtstoffplatte.

Im Folgenden werden, sofern nicht anders angegeben, für gleiche oder gleichwirkende Elemente gleiche Bezugszeichen verwendet.

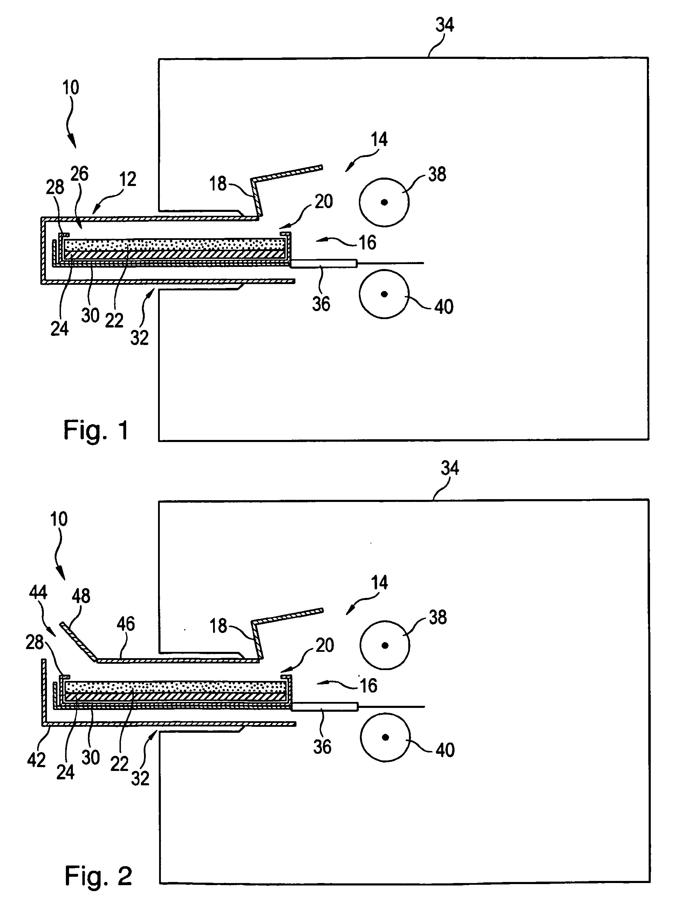

Fig. 1 zeigt ein System 10 mit einer Röntgenkassette 12, die eine Öffnung 14 aufweist. Die Öffnung 14 ist hier an einer schmalen Frontfläche 16 der Röntgenkassette 12 ausgebildet. Zum Öffnen und Schließen der Öffnung 14 weist die Röntgenkassette 12 einen verschwenkbaren Verschluss 18 auf. Im Innern der Röntgenkassette 12 befindet sich eine Speicherleuchtstoffplatte 20, die durch die Öffnung 14 aus der Röntgenkassette 12 hinaus und von außerhalb der Röntgenkassette 12 in diese hinein transportiert werden kann. Die Röntgenkassette 12 enthält eine Speicherleuchtstoffschicht 22 zum Speichern von Röntgeninformationen und eine Trägerschicht 24, auf der die Speicherleuchtstoffschicht 22 aufgebracht ist. Die Speicherleuchtstoffplatte 20 ist in einem Aufnahmeraum 26 einer Aufnahmevorrichtung 28 angeordnet, in der die Speicherleuchtstoffplatte 20 sicher gehalten wird. Die Speicherleuchtstoffplatte 20 liegt innerhalb der Röntgenkassette 12 auf einer herausziehbaren Schublade 30.

Die Röntgenkassette 12 steckt in einer Eingabeeinrichtung 32 einer Auslesevorrichtung 34 zum Auslesen der in der Röntgenkassette 12 befindlichen Speicherleuchtstoffplatte 20. Die Auslesevorrichtung 34 enthält eine Einrichtung zum Öffnen und Schließen des Verschlusses 18 der Röntgenkassette 12. Die Auslesevorrichtung 34 enthält ferner eine Entnahmeeinrichtung 36, die bei geöffnetem Verschluss 18 am Rand der Schublade 30 angreift und diese zusammen mit der darauf liegenden Speicherleuchtstoffplatte 20 aus der Röntgenkassette 12 hinaus in Richtung zweier übereinander angeordneter Transportwalzen 38 und 40 zieht. Die Transportwalzen 38, 40 erfassen die in der Aufnahmevorrichtung 28 befindliche Speicherleuchtstoffplatte 20 und transportieren sie zur weiteren Verarbeitung weiter ins Innere der Auslesevorrichtung 34. Nach dem Auslesen von in der Speicherleuchtstoffschicht 22 gespeicherten Röntgeninformationen wird die Speicherleuchtstoffplatte 20 wieder zurück in die Röntgenkassette 12 transportiert. Während der Verarbeitung innerhalb der Auslesevorrichtung 34 verbleibt die Speicherleuchtstoffplatte 20 in der Aufnahmevorrichtung 28. Die Auslesevorrichtung 34 ist prinzipiell bekannt und wird daher im Einzelnen nicht weiter beschrieben. Es wird diesbezüglich insbesondere auf den oben beschriebenen allgemeinen Stand der Technik verwiesen.

Fig. 2 zeigt das System 10 mit einer Röntgenkassette 42, die zwei Öffnungen aufweist. Neben der Öffnung 14 an ihrer Frontfläche 16 hat die Röntgenkassette 42 eine Öffnung 44 an ihrer Deckelfläche 46. Innerhalb der Röntgenkassette 42 befindet sich die Speicherleuchtstoffplatte 20. Diese kann durch die Öffnung 44 aus der Röntgenkassette 12 hinaus und von außerhalb der Röntgenkassette 12 in diese hinein transportiert werden. Die Öffnung 44 ist durch einen Verschluss 48 öffen- und verschließbar, der hier verschwenkbar ist. Die Röntgenkassette 42 steckt mit ihrer Öffnung 14 in der Eingabeeinrichtung 32 der Auslesevorrichtung 34. In dieser Position ragt die Öffnung 44 aus der Eingabeeinrichtung 32 hinaus und ist insbesondere für eine Bedienperson zugänglich. Vorteilhafterweise kann die Bedienperson den Verschluss 48 betätigen und bei Bedarf die Speicherleuchtstoffplatte 20 in die Röntgenkassette 42 hineinführen oder aus ihr herausnehmen, während sie in der Eingabeeinrichtung 32 steckt. Im vorliegenden Ausführungsbeispiel nach Fig. 2 befindet sich die Speicherleuchtstoffplatte 20 in der Aufnahmevorrichtung 28. Für das Ausnutzen der Vorteile der Röntgenkassette 42 mit ihren zwei Öffnungen 14 und 44 benötigt die Speicherleuchtstoffplatte 20 allerdings nicht notwendigerweise die Aufnahmevorrichtung 28. Vielmehr kann die Speicherleuchtstoffplatte 20, sofern sie eine für das Innere der Röntgenkassette 42 geeignete Größe und Form aufweist, auch ohne Aufnahmevorrichtung 28 in der Röntgenkassette 42 abgelegt sein.

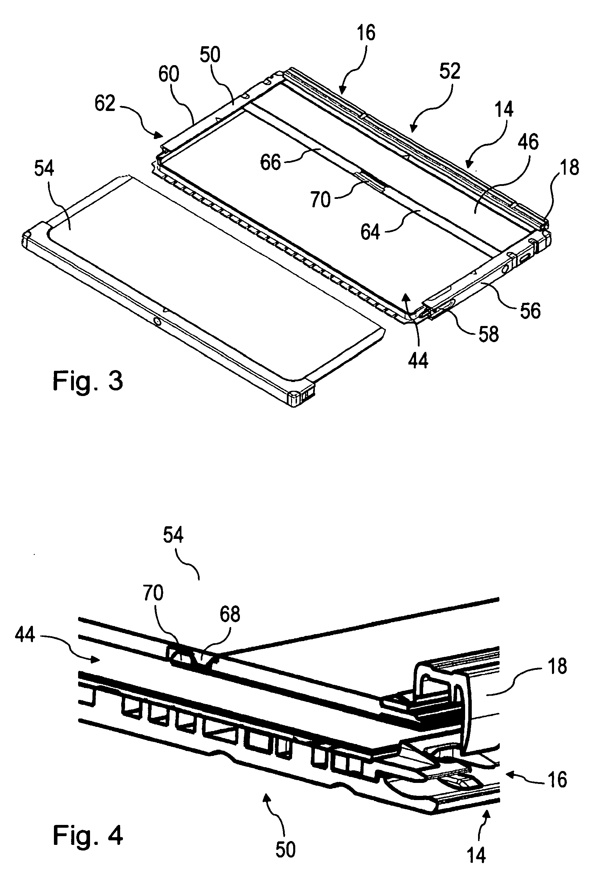

Fig. 3 zeigt eine Röntgenkassette 50 mit zwei Öffnungen 14 und 44 zum Einführen einer Speicherleuchtstoffplatte in die Röntgenkassette 50 und zum Herausnehmen der in der Röntgenkassette 50 befindlichen Speicherleuchtstoffplatte aus der Röntgenkassette 50. Die Öffnung 14 ist an der schmalen Frontfläche 16 der Röntgenkassette 50 ausgebildet und mittels des Verschlusses 18 öffen- und schließbar. Der Verschluss 18 ist hier im Wesentlichen L-förmig oder hakenförmig ausgestaltet und an einem Gelenk entlang eines Übergangs der Deckelfläche 46 der Röntgenkassette 50 zu der Frontfläche 16 verschwenkbar befestigt. Die Öffnung 44 ist in der Deckelfläche 46 ausgebildet. Im vorliegenden Ausführungsbeispiel ist die Öffnung 44 von dem Übergang der Deckelfläche 46 zu der Frontfläche 16 beabstandet und erstreckt sich bis auf einen linken und rechten Randbereich im Wesentlichen über die gesamte Breite der Röntgenkassette 50. Die Öffnung 44 umfasst hier ferner eine schmale Frontfläche 52, die der Frontfläche 16 gegenüberliegt. Die Öffnung 44 ist mittels eines abnehmbaren Deckelteils 54 als Verschluss 48 öffen- und verschließbar.

Als Verschlussmechanismus zum Öffnen und Verschließen der Öffnung 44 ist an einer schmalen Seitenfläche 56 der Röntgenkassette 50 eine Verschlussfeder 58 angebracht. Vorteilhafterweise ist an einer der Seitenfläche 56 gegenüberliegenden Seitenfläche 60 der Röntgenkassette 50 eine weitere Verschlussfeder 62 vorhanden. Dadurch wird die Funktionalität des Öffnens und Verschließens verbessert. An einer Verschlusskante 64, an der die Röntgenkassette 50 und ihr Deckelteil 54 in geschlossenem Zustand der Öffnung 44 aneinander treffen, ist an der Röntgenkassette 50 eine Blende angebracht, um die Lichtdichtheit der Röntgenkassette 50 in ihrem geschlossenen Zustand zu gewährleisten. Die Blende ist hier in Form eines schmalen Überlapps 66 realisiert, so dass sich dieser Überlapp 66 bei geschlossener Öffnung 44 im Bereich der Verschlusskante 64 unter das Deckelteil 54 erstreckt. Prinzipiell ist es auch möglich, die Blende anders auszugestalten. Beispielsweise kann der Überlapp 66 so angebracht sein, dass er sich bei geschlossener Öffnung 44 über das Deckelteil 54 erstreckt.

Zum sicheren und zuverlässigen Verschließen der Öffnung 44 durch das Deckelteil 54 sind in einem Bereich der Verschlusskante 64, an der die Röntgenkassette 50 und ihr Deckelteil 54 in geschlossenem Zustand der Öffnung 44 aneinandertreffen, in der Röntgenkassette 50 und dem Deckelteil 54 einander entgegengerichtete Rastnasen vorhanden. Diese entgegengerichtete Rastnasen greifen in geschlossenem Zustand der Öffnung 44 ineinander. Die Rastnasen können im Wesentlichen über die gesamte Breite der Verschlusskante 64 verlaufen. Es ist aber ebenso möglich, die Ausbreitung der Rastnasen auf einen Teil der Verschlusskante 64 zu begrenzen. Hier erstrecken sich die Rastnasen einfachheitshalber über einen Teilbereich der Verschlusskante 64, der in etwa in der Mitte der Breitenausdehnung der Verschlusskante 64 liegt. Die in der Röntgenkassette 50 vorhandene Rastnase ist vorteilhafterweise in dem Überlapp 66 ausgebildet.

Fig. 4 verdeutlicht diesen Verschlussmechanismus mittels der einander entgegengerichteten Rastnasen. Fig. 4 zeigt einen Ausschnitt eines Querschnitts der Röntgenkassette 50 nach Fig. 3 bei geschlossener Öffnung 44. Dargestellt ist eine nach unten gerichtete Rastnase 68 im Deckelteil 54 und eine nach oben gerichtete Rastnase 70 in der Röntgenkassette 50. Die beiden Rastnasen 68, 70 greifen in dem dargestellten geschlossenen Zustand der Öffnung 44 ineinander. Die Fig. 4 verdeutlicht ebenfalls den L-förmigen Verschluss 18 zum Verschließen der Öffnung 14 an der Frontfläche 16. In der Darstellung nach Fig. 4 befindet sich der Verschluss 18 nach oben geschwenkt in seinem geöffnetem Zustand. Die Öffnung 14 ist somit geöffnet.

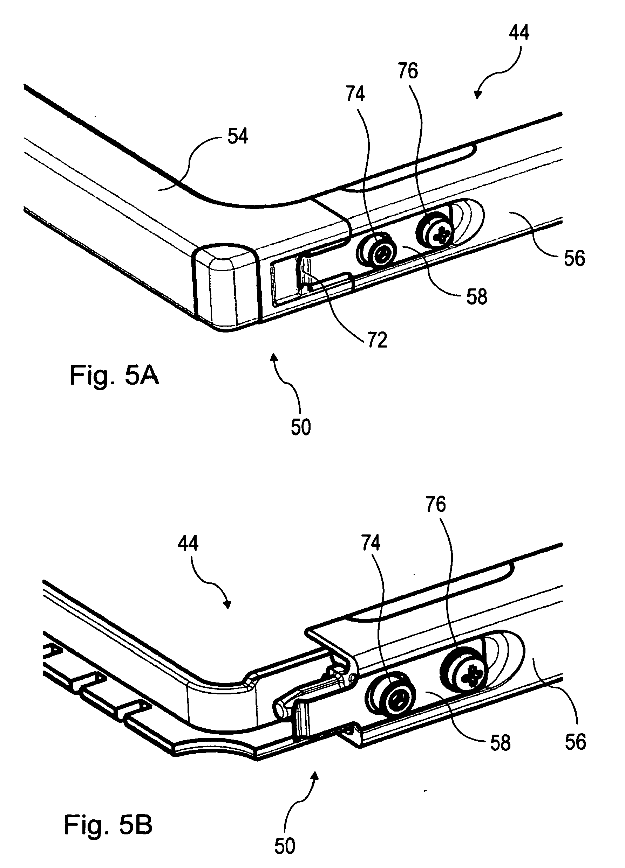

Fig. 5A und Fig. 5B verdeutlichen die Verschlussfeder 58 zum Verschließen des abnehmbaren Deckelteils 54 der Röntgenkassette 50 nach Fig. 3. Die Verschlussfeder 58 ist an der Seitenfläche 56 der Röntgenkassette 50 angebracht. In der Darstellung nach Fig. 5A ist das Deckelteil 54 an der Röntgenkassette 50 befestigt, so dass die Öffnung 44 geschlossen ist. Die Verschlussfeder 58 ist in das Deckelteil 54 eingerastet. Dazu weist die Verschlussfeder 58 an ihrer Spitze eine Rastnase 72 auf. Diese Rastnase 72 greift in das Deckelteil 54 ein und arretiert dieses an der Röntgenkassette 50. Die Verschlussfeder 58 ist mittels zweier Schrauben 74 und 76 an der Röntgenkassette 50 befestigt. Wird die Verschlussfeder 58 nach innen, in Richtung des Inneren der Röntgenkassette 50 gedrückt, so löst sich die Rastnase 72 aus dem Deckelteil 54. Dieses kann dann von der Röntgenkassette 50 abgenommen werden. Die Darstellung nach Fig. 5B verdeutlicht die Ausgestaltung der Verschlussfeder 58. Fig. 5B zeigt einen Ausschnitt der Röntgenkassette 50 bei geöffneter Öffnung 44. Das Deckelteil 54 ist nicht an der Röntgenkassette 50 befestigt. Fig. 5B zeigt deutlich die Rastnase 72 der Verschlussfeder 58. Die Verschlussfeder 58 kann vorteilhafterweise eine geeignete Länge aufweisen, um dadurch die Kraft, die zum Lösen des Deckelteils 54 erforderlich ist, optimal einzustellen. Diese Kraft sollte nicht zu groß sein, um der Bedienperson ein einfaches Öffnen zu ermöglichen.

Die ggf. an der Seitenfläche 60 angebrachte Verschlussfeder 62 entspricht vorteilhafterweise der Verschlussfeder 58.

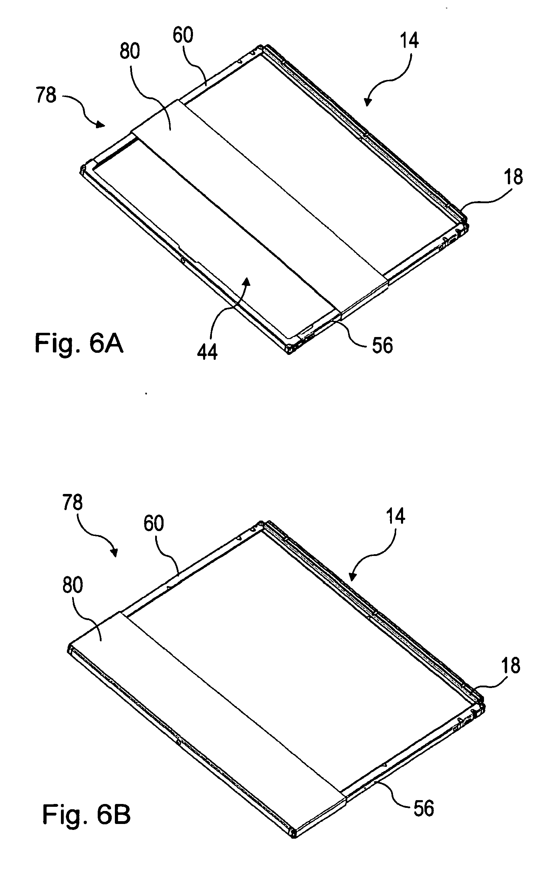

Fig. 6A und Fig. 6B zeigen eine Röntgenkassette 78 mit einem verschiebbaren Deckelteil 80 als Verschluss 48 ihrer Öffnung 44. Das Deckelteil 80 erstreckt sich hier über die gesamte Breite der Röntgenkassette 78. Das Deckelteil 80 ist an den Seitenflächen 56 und 60 verschiebbar gelagert und kann senkrecht zur Breitenausdehnung der Röntgenkassette 78 entlang ihrer Deckelfläche verschoben werden. Fig. 6A zeigt die Röntgenkassette 78 mit geöffneter Öffnung 44 und Fig. 6B mit geschlossener Öffnung 44.

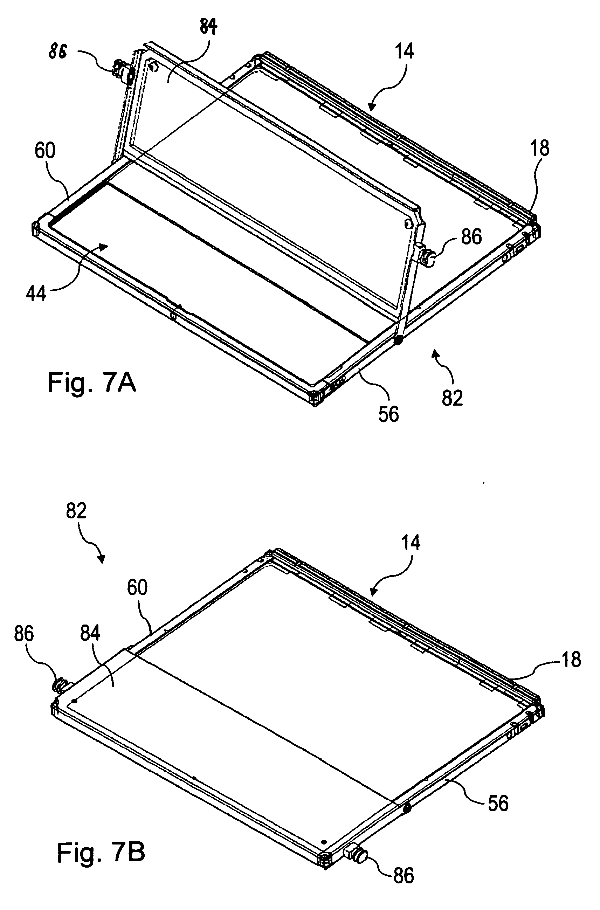

Fig. 7A und Fig. 7B zeigen eine Röntgenkassette 82 mit einem verschwenkbaren Deckelteil 84 als Verschluss 48 ihrer Öffnung 44. Das Deckelteil 84 ist an den beiden gegenüberliegenden Seitenflächen 56, 60 der Röntgenkassette 82 schwenkbar gelagert. Fig. 7A zeigt die Röntgenkassette 82 mit geöffneter Öffnung 44 und Fig. 7B mit geschlossener Öffnung 44. An dem Deckelteil 84 sind vorteilhafterweise zwei Rastverschlüsse 86 angeordnet, die in geschlossenem Zustand des Deckelteils 84 in korrespondierende Löcher eingreifen, die in den Seitenflächen 56, 60 vorhanden sind.

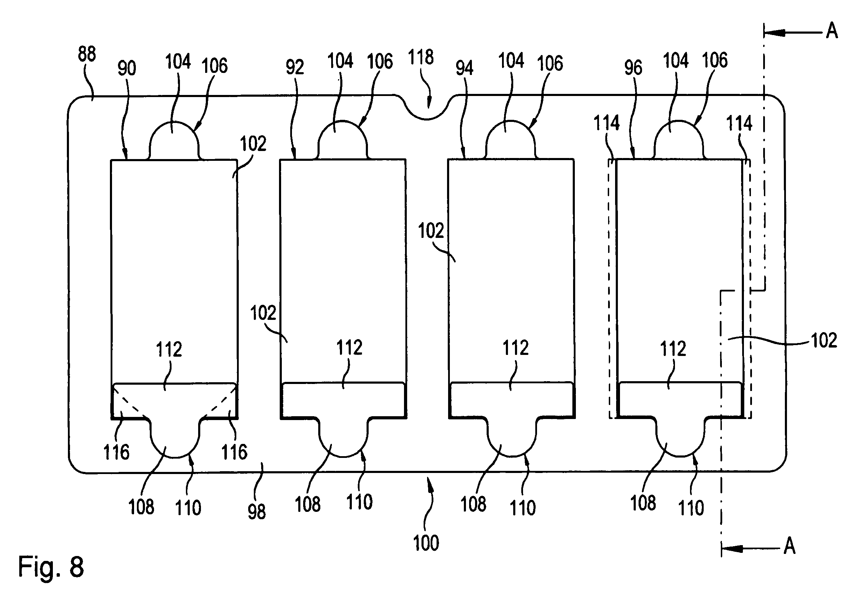

Fig. 8 zeigt eine Draufsicht auf eine Aufnahmevorrichtung 88 zum Aufnehmen von mehreren Speicherleuchtstoffplatten. Im vorliegenden Ausführungsbeispiel kann die Aufnahmevorrichtung 88 beispielhaft vier Speicherleuchtstoffplatten aufnehmen. Dazu weist sie mehrere, d. h. hier vier, Aufnahmeräume 90, 92, 94 und 96 auf, deren Maße und Geometrien an die von ihnen aufzunehmenden Speicherleuchtstoffplatten angepasst sind. Hier haben die Aufnahmeräume 90, 92, 94, 96 jeweils eine rechteckige Geometrie für entsprechend rechteckig ausgestaltete, symmetrische Speicherleuchtstoffplatten. Die Aufnahmevorrichtung 88 weist eine Abdeckplatte 98 und eine unter dieser befindliche Grundplatte 100 auf. Die Abdeckplatte 98 und die Grundplatte 100 sind voneinander beabstandet und außerhalb der Aufnahmeräume 90, 92, 94, 96 über eine zwischen ihnen angeordnete Zwischenschicht miteinander verbunden. Für jeden der Aufnahmeräume 90, 92, 94 und 96 weist die Abdeckplatte 98 eine erste Aussparung 102 auf, so dass die Abdeckplatte 98 hier vier erste Aussparungen 102 aufweist. Die ersten Aussparungen 102 gewährleisten, dass bei von den Aufnahmeräumen 90, 92, 94, 96 aufgenommenen Speicherleuchtstoffplatten deren Speicherleuchtstoffschichten im Wesentlichen nicht verdeckt und frei zugänglich sind. Die ersten Aussparungen 102 haben vorteilhafterweise im Wesentlichen die Größen der Speicherleuchtstoffschichten und befinden sich bei aufgenommenen Speicherleuchtstoffplatten über den Oberflächen der Speicherleuchtstoffschichten der aufgenommenen Speicherleuchtstoffplatten.

In der Abdeckplatte 98 sind den Aufnahmeräumen 90, 92, 94 und 96 zugeordnete zweite Aussparungen 104 vorhanden, die hier an die Kopfseiten der ersten Aussparungen 102 angrenzen. Des Weiteren sind in der Grundplatte 100 den Aufnahmeräumen 90, 92, 94, 96 zugeordnete dritte Aussparungen 106 vorhanden, die sich unterhalb den zweiten Aussparungen 104 befinden. Zusammen mit in der Zwischenschicht vorhandenen Aussparungen ergeben sich somit an den Kopfseiten der ersten Aussparungen 102 vollständige Durchgänge durch die Aufnahmevorrichtung 88. In der Abdeckplatte 98 sind ferner den Aufnahmeräumen 90, 92, 94 und 96 zugeordnete vierte Aussparungen 108 vorhanden, die hier an die Fußseiten der ersten Aussparungen 102 angrenzen. In der Grundplatte 100 sind darüberhinaus den Aufnahmeräumen 90, 92, 94 und 96 zugeordnete fünfte Aussparungen 110 vorhanden, die sich unterhalb der vierten Aussparungen 108 befinden. Zusammen mit in der Zwischenschicht vorhandenen weiteren Aussparungen ergeben sich somit ebenfalls an den Fußseiten der ersten Aussparungen 102 vollständige Durchgänge durch die Aufnahmevorrichtung 88. Die vollständigen Durchgänge durch die Aufnahmevorrichtung 88 an den Kopfseiten und den Fußseiten der ersten Aussparungen ermöglichen vorteilhafterweise ein einfaches, sicheres und bequemes Zuführen der Speicherleuchtstoffplatten in die Aufnahmeräume 90, 92, 94, 96 sowie ein einfaches, sicheres und bequemes Entnehmen der Speicherleuchtstoffplatten aus den Aufnahmeräumen 90, 92, 94, 96. Die Durchgänge und die sie bildenden Aussparungen weisen hier vorteilhafterweise einen Teilkreis auf, der ein besonders komfortables Erfassen der Speicherleuchtstoffplatte insbesondere durch die Bedienperson ermöglicht.

In der Grundplatte 100 sind den Aufnahmeräumen 90, 92, 94 und 96 zugeordnete sechste Aussparungen 112 vorhanden, die zum einfachen und zuverlässigen Zuführen der Speicherleuchtstoffplatten zu und zum Entnehmen der Speicherleuchtstoffplatten aus den Aufnahmeräumen 90, 92, 94, 96 dienen. Die sechsten Aussparungen 112 grenzen hier unmittelbar an die fünften Aussparungen 110 an und befinden sich unterhalb der ersten Aussparungen 102. Dadurch ergibt sich auch bei den sechsten Aussparungen 112 ein vollständiger Durchgang durch die Aufnahmevorrichtung 88. Die sechsten Aussparungen 112 erstrecken sich im Wesentlichen über die gesamte Breite der Aufnahmeräume 90, 92, 94, 96 und sind hier rechteckförmig. Sie können aber auch eine andere geeignete Form haben.

Die Abdeckplatte 98 und die Grundplatte 100 sind so mittels der Zwischenschicht miteinander verbunden, dass entlang der einander gegenüberliegenden Längsseiten der Aufnahmeräume 90, 92, 94, 96 zwischen der Abdeckplatte 98 und der Grundplatte 100 schienenförmige Leerräume 114 zum jeweiligen Aufnehmen eines Randbereichs der Speicherleuchtstoffplatten vorhanden sind. In der Fig. 8 sind stellvertretend die schienenförmigen Leerräume 114 des Aufnahmeraums 96 dargestellt. In diesen schienenförmigen Leerräumen 114 können die Speicherleuchtstoffplatten bequem zum Ein- und Ausführen verschoben werden. Gleichzeitig werden die in den Aufnahmeräumen 90, 92, 94, 96 befindlichen Speicherleuchtstoffplatten sicher gehalten. Dies ist insbesondere bei der weiteren Verarbeitung der in der Aufnahmevorrichtung 88 gehaltenen Speicherleuchtstoffplatten in einer Auslesevorrichtung, wie derjenigen der Auslesevorrichtung 34 (Fig. 2), vorteilhaft. Insbesondere für eine solche weitere Verarbeitung der Speicherleuchtstoffplatten ist die Aufnahmevorrichtung 88 aus einem flexiblen Material, insbesondere einem flexiblen Kunststoffmaterial. Dies ermöglicht vorteilhafterweise leichte Verbiegungen der Aufnahmevorrichtung 88. Um ein noch besseres Halten der Speicherleuchtstoffplatten in den Aufnahmeräumen 90, 92, 94, 96 zu erreichen, können in Randbereichen der ersten Aussparungen 102, insbesondere im Bereich ihrer Fußseiten, kleine Überlappe 116 in der Abdeckplatte 98 ausgebildet sein. Überlappe 116 sind vor allem über den sechsten Aussparungen 112 vorteilhaft. In der Fig. 8 sind solche Überlappe 116 beispielhaft bei dem Aufnahmeraum 90 angedeutet. Überlappe 116 können auch bei den anderen Aufnahmeräumen 92, 94, 96 vorhanden sein. Zum zuverlässigen und einfachen Erfassen der Aufnahmevorrichtung 88, insbesondere durch die Bedienperson, weist die Aufnahmevorrichtung 88 eine Einkerbung 118 an einer Längsseite auf.

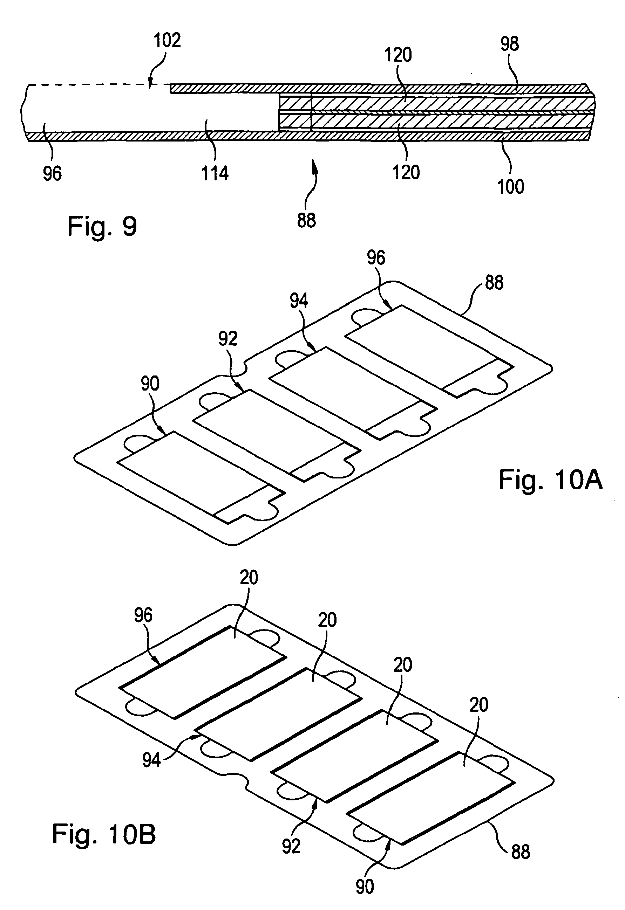

Fig. 9 zeigt beispielhaft eine Querschnittsansicht der Aufnahmevorrichtung 88 nach Fig. 8 entlang des Schnitts A-A. Dargestellt ist die Abdeckplatte 98, die über eine Zwischenschicht 120 mit der Grundplatte 100 verbunden ist. Über dem Aufnahmeraum 96 befindet sich in der Abdeckplatte 98 die erste Aussparung 102. An der Längsseite des Aufnahmeraums 96 ist der schienenförmige Leerraum 114 zu sehen, der von der Abdeckplatte 98 überdeckt wird. Dadurch wird ein zuverlässigen Halten der Speicherleuchtstoffplatte in dem Aufnahmeraum 96 gewährleistet.

Fig. 10A und Fig. 10B zeigen perspektivische Ansichten auf die Oberseite der Aufnahmevorrichtung 88 nach Fig. 8. Fig. 10A zeigt die Aufnahmevorrichtung 88 ohne aufgenommene Speicherleuchtstoffplatten. Fig. 10B zeigt die Aufnahmevorrichtung 88 mit aufgenommenen Speicherleuchtstoffplatten 20.

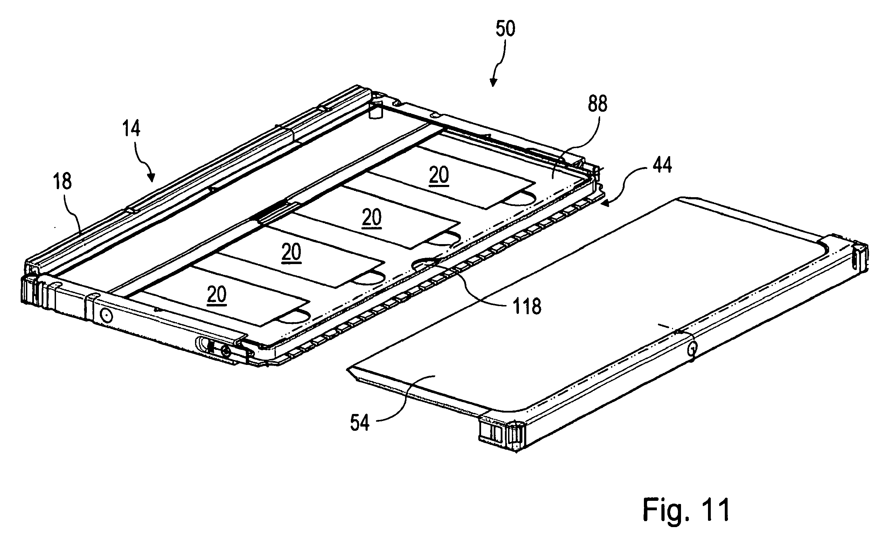

Fig. 11 zeigt eine weitere schematische Darstellung der Röntgenkassette 50 nach Fig. 3 mit einer in ihrem Innern befindlichen Aufnahmevorrichtung 88 nach Fig. 8. In der Darstellung nach Fig. 11 ist das Deckelteil 54 von der Röntgenkassette 50 abgenommen, so dass die Öffnung 44 offen ist. In den Aufnahmeräumen 90, 92, 94, 96 der Aufnahmevorrichtung 88 befinden sich in dieser Darstellung Speicherleuchtstoffplatten 20. Bei geöffnetem Deckelteil 54 kann die Aufnahmevorrichtung 88 auf einfache Weise insbesondere von einer Bedienperson aus der Röntgenkassette 50 entnommen werden. Dazu ist die dargestellte Einkerbung 118 der Aufnahmevorrichtung 88 besonders praktisch.

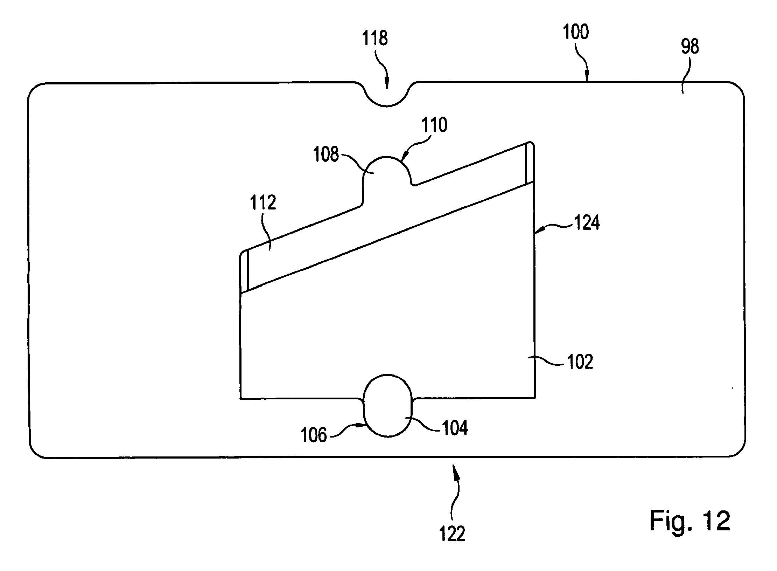

Fig. 12 zeigt eine Draufsicht auf eine Aufnahmevorrichtung 122 mit einem Aufnahmeraum 124 für eine Speicherleuchtstoffplatte. Der Aufnahmeraum 124 hat hier eine asymmetrische Form, um zu verdeutlichen, dass prinzipiell Speicherleuchtstoffplatten beliebiger Form von einer entsprechend gestalteten Aufnahmevorrichtung aufgenommen werden können. Das Prinzip der Anordnung und Ausgestaltung der verschiedenen Aussparungen 102, 104, 106, 108, 110 und 112 von Abdeckplatte 98 und Grundplatte 100 entspricht weitgehend demjenigen der Aufnahmevorrichtung 88. Es wird somit hier nicht weiter darauf eingegangen und diesbezüglich auf deren obige Beschreibung verwiesen.

## Patentansprüche

1. Aufnahmevorrichtung (28, 88, 122) zum Aufnehmen einer Speicherleuchtstoffplatte (20), wobei die Aufnahmevorrichtung (28, 88, 122) folgendes aufweist:
- eine Speicherleuchtstoffplatte (20), die eine Speicherleuchtstoffschicht (22) zum Speichern von Röntgeninformationen umfasst,
- eine Abdeckplatte (98) mit einer ersten Aussparung (102) und
- eine Grundplatte (100), welche von der Abdeckplatte (98) beabstandet ist, so dass zwischen der Grundplatte (100) und der Abdeckplatte (98) ein Aufnahmeraum (90, 92, 94, 96,124) vorhanden ist, in welchem die Speicherleuchtstoffplatte (20) aufgenommen ist,
wobei die Speicherleuchtstoffplatte (20) im Aufnahmeraum (90, 92, 94, 96, 124) zwischen der Abdeckplatte (98) und der Grundplatte (100) gehalten wird und sich die erste Aussparung (102), die im Wesentlichen die Größe der Speicherleuchtstoffschicht (22) hat, bei aufgenommener Speicherleuchtstoffplatte (20) über der Oberfläche der Speicherleuchtstoffschicht (22) der aufgenommenen Speicherleuchtstoffplatte (20) befindet, so dass die Oberfläche der Speicherleuchtstoffschicht (22) der aufgenommenen Speicherleuchtstoffplatte (20) im Wesentlichen nicht von der Abdeckplatte (98) verdeckt wird,
**dadurch gekennzeichnet, dass**
in der Grundplatte (100) mindestens eine sechste Aussparung (112) vorhanden ist, durch welche hindurch die Speicherleuchtstoffplatte (20) in den Aufnahmeraum (90, 92, 94, 96, 124) eingeführt und aus dem Aufnahmeraum (90, 92, 94, 96, 124) entnommen werden kann.

2. Aufnahmevorrichtung nach Anspruch 1, wobei die Abdeckplatte (98) und die Grundplatte (100) voneinander beabstandet sind und außerhalb des Aufnahmeraums (90, 92, 94, 96) über eine zwischen der Abdeckplatte (98) und der Grundplatte (100) angeordnete Zwischenschicht (120) so miteinander verbunden sind, dass entlang von einander gegenüberliegenden Seiten des Aufnahmeraums (90, 92, 94, 96) zwischen der Abdeckplatte (98) und der Grundplatte (100) ein schienenförmiger Leerraum (114) zum Aufnehmen eines Randbereichs der Speicherleuchtstoffplatte (20) vorhanden ist.

3. Aufnahmevorrichtung nach einem der vorhergehenden Ansprüche, wobei in der Abdeckplatte (98) eine zweite Aussparung (104) vorhanden ist, die an die erste Aussparung (102) der Abdeckplatte (98) angrenzt.

4. Aufnahmevorrichtung nach Anspruch 1 und 3, wobei in der Grundplatte (100) eine dritte Aussparung (106) vorhanden ist, die sich unterhalb der zweiten Aussparung (104) der Abdeckplatte (98) befindet.

5. Aufnahmevorrichtung nach Anspruch 3 oder 4, wobei in der Abdeckplatte (98) eine vierte Aussparung (108) vorhanden ist, die an die erste Aussparung (102) der Abdeckplatte (98) angrenzt und der zweiten Aussparung (104) gegenüberliegt, so dass sich die erste Aussparung zwischen der zweiten und der vierten Aussparung befindet.

6. Aufnahmevorrichtung nach Anspruch 5, wobei in der Grundplatte (100) eine fünfte Aussparung (110) vorhanden ist, die sich unterhalb der vierten Aussparung (108) der Abdeckplatte (98) befindet.

7. Aufnahmevorrichtung nach einem der Ansprüche 1 bis 6, wobei sich die mindestens eine sechste Aussparung (112) im Wesentlichen über die gesamte Breite des Aufnahmeraums (90, 92, 94, 96) erstreckt.

8. Aufnahmevorrichtung nach Anspruch 6, wobei die sechste Aussparung (112) an die fünfte Aussparung (110) angrenzt.

9. Aufnahmevorrichtung nach einem der vorhergehenden Ansprüche, wobei sie aus einem flexiblen Material, insbesondere einem flexiblen Kunststoffmaterial, hergestellt ist.

10. Aufnahmevorrichtung nach einem der vorhergehenden Ansprüche, wobei sie zum Aufnehmen von mehreren Speicherleuchtstoffplatten (20) ausgestaltet ist, wobei zwischen der Grundplatte (100) und der Abdeckplatte (98) mehrere Aufnahmeräume (90, 92, 94, 96) zum Aufnehmen der Speicherleuchtstoffplatten (20) vorhanden sind und die Abdeckplatte (98) mehrere erste Aussparungen (102) aufweist, welche sich über den Oberflächen der Speicherleuchtstoffschichten (22) der aufgenommenen Speicherleuchtstoffplatten (20) befinden.

11. Röntgenkassette (12, 42, 50, 78, 82) mit einer Aufnahmevorrichtung (28, 88, 122) nach einem der vorhergehenden Ansprüche.

12. Röntgenkassette nach Anspruch 11 mit zwei verschließbaren Öffnungen (14, 44), durch welche die Aufnahmevorrichtung (28, 88, 122) in die Röntgenkassette (42, 50, 78, 82) einführbar und die in der Röntgenkassette (42, 50, 78, 82) befindliche Aufnahmevorrichtung (28, 88, 122) aus der Röntgenkassette (42, 50, 78, 82) herausnehmbar ist.

13. Röntgenkassette nach Anspruch 12 mit einem verschwenkbaren Verschluss (18) zum Öffnen und Schließen einer der Öffnungen (14) der Röntgenkassette (42, 50, 78, 82) und mit einem verschwenkbaren, abnehmbaren oder verschiebbaren Verschluss (48, 54, 80) zum Öffnen und Schließen der anderen der Öffnungen (44) der Röntgenkassette (42, 50, 78, 82).

## Claims

1. A holding apparatus (28, 88, 122) for holding a storage phosphor plate (20), the holding apparatus (28, 88, 122) comprising the following:
- a storage phosphor plate (20) that comprises a storage phosphor layer (22) for storing X-ray information,
- a covering plate (98) with a first recess (102) and
- a base plate (100) which is spaced apart from the covering plate (98) so that there is a holding space (90, 92, 94, 96, 124) between the base plate (100) and the covering plate (98) in which the storage phosphor plate (20) is held,
the storage phosphor plate (20) being held in the holding space (90, 92, 94, 96, 124) between the covering plate (98) and the base plate (100), and the first recess (102), which is of substantially the same size as the storage phosphor layer (22), being located over the surface of the storage phosphor layer (22) of the storage phosphor plate (20) being held when the storage phosphor plate (20) is held so that the surface of the storage phosphor plate (22) of the storage phosphor plate (20) being held is substantially not concealed by the covering plate (98),
**characterised in that**
there is in the base plate (100) at least a sixth recess (112) through which the storage phosphor plate (20) can be introduced into the holding space (90, 92, 94, 96, 124) and can be removed from the holding space (90, 92, 94, 96, 124).

2. The holding apparatus according to Claim 1, the covering plate (98) and the base plate (100) being spaced apart from one another and being connected to one another outside of the holding space (90, 92, 94, 96) by means of an intermediate layer (120) disposed between the covering plate (98) and the base plate (100) such that there is a barshaped empty space (114) for holding a peripheral region of the storage phosphor plate (20) along opposing sides of the holding space (90, 92, 94, 96) between the covering plate (98) and the base plate (100).

3. The holding apparatus according to any of the preceding claims, there being a second recess (104) in the covering plate (98) that is adjacent to the first recess (102) of the covering plate (98).

4. The holding apparatus according to Claims 1 and 3, there being a third recess (106) in the base plate (100) that is located beneath the second recess (104) of the covering plate (98).

5. The holding apparatus according to Claim 3 or 4, there being a fourth recess (108) in the covering plate (98) which is adjacent to the first recess (102) of the covering plate (98) and lies opposite the second recess (104) so that the first recess is located between the second and the fourth recess.

6. The holding apparatus according to Claim 5, there being a fifth recess (110) in the base plate (100) which is located beneath the fourth recess (108) of the covering plate (98).

7. The holding apparatus according to any of Claims 1 to 6, the at least one sixth recess (112) extending over substantially the entire width of the holding space (90, 92, 94, 96).

8. The holding apparatus according to Claim 6, the sixth recess (112) being adjacent to the fifth recess (110).

9. The holding apparatus according to any of the preceding claims, the latter being made of a flexible material, in particular a flexible plastic material.

10. The holding apparatus according to any of the preceding claims, the latter being designed to hold a number of storage phosphor plates (20), there being between the base plate (100) and the covering plate (98) a number of holding spaces (90, 92, 94, 96) for holding the storage phosphor plates (20) and the covering plate (98) having a number of first recesses (102) which are located over the surfaces of the storage phosphor layers (22) of the storage phosphor plates (20) being held.

11. An X-ray cassette (12, 42, 50, 78, 82) comprising a holding apparatus (28, 88, 122) according to any of the preceding claims.

12. The X-ray cassette according to Claim 11 comprising two closeable openings (14, 44) through which the holding apparatus (28, 88, 122) can be introduced into the X-ray cassette (42, 50, 78, 82) and the holding apparatus (28, 88, 122) located within the X-ray cassette (42, 50, 78, 82) can be removed from the X-ray cassette (42, 50, 78, 82).

13. The X-ray cassette according to Claim 12 comprising a swivelling closure (18) for opening and closing one of the openings (14) of the X-ray cassette (42, 50, 78, 82) and comprising a swivelling, detachable or displaceable closure (48, 54, 80) for opening and closing the other of the openings (44) of the X-ray cassette (42, 50, 78, 82).

## Revendications

1. Dispositif de réception (28, 88, 122) destiné à recevoir une plaque photostimulable (20), dans lequel le dispositif de réception (28, 88, 122) présente les éléments suivants :
- une plaque photostimulable (20) comprenant une couche photostimulable (22) destinée à stocker des informations radiographiques,
- une plaque de couverture (98) comportant un premier évidement (102), et
- une plaque de base (100) qui est écartée de la plaque de couverture (98) de manière à produire, entre la plaque de base (100) et la plaque de couverture (98), un espace de réception (90, 92, 94, 96, 124) dans lequel la plaque photostimulable (20) est reçue,
dans lequel la plaque photostimulable (20) est maintenue dans l'espace de réception (90, 92, 94, 96, 124) entre la plaque de couverture (98) et la plaque de base (100) et dans lequel le premier évidement (102), ayant essentiellement la taille de la couche photostimulable (22), se trouve, une fois que la plaque photostimulable (20) a été reçue, au-dessus de la surface de la couche photostimulable (22) de la plaque photostimulable (20) reçue, de telle sorte que la surface de la couche photostimulable (22) de la plaque photostimulable reçue (20) ne soit essentiellement pas recouverte par la plaque de couverture (98),
**caractérisé en ce que**
la plaque de base (100) présente au moins un sixième évidement (112) par lequel la plaque photostimulable (20) est introduite dans l'espace de réception (90, 92, 94, 96, 124) et est retirée de l'espace de réception (90, 92, 94, 96, 124).

2. Dispositif de réception selon la revendication 1, dans lequel la plaque de couverture (98) et la plaque de base (100) sont écartées l'une de l'autre et sont reliées l'une à l'autre en dehors de l'espace de réception (90, 92, 94, 96) par une couche intermédiaire (120) disposée entre la plaque de couverture (98) et la plaque de base (100) de manière qu'il se trouve, le long de côtés mutuellement opposés de l'espace de réception (90, 92, 94, 96), entre la plaque de couverture (98) et la plaque de base (100), un espace vide (114) en forme de rail destiné à recevoir une zone de bord de la plaque photostimulable (20).

3. Dispositif de réception selon l'une des revendications précédentes, dans lequel la plaque de couverture (98) présente un deuxième évidement (104) qui touche le premier évidement (102) de la plaque de couverture (98).

4. Dispositif de réception selon les revendications 1 et 3, dans lequel la plaque de base (100) présente un troisième évidement (106) qui se trouve sous le deuxième évidement (104) de la plaque de couverture (98).

5. Dispositif de réception selon la revendication 3 ou 4, dans lequel la plaque de couverture (98) présente un quatrième évidement (108) qui touche le premier évidement (102) de la plaque de couverture (98) et qui est à l'opposé du deuxième évidement (104), de manière que le premier évidement se trouve entre le deuxième et le quatrième évidement.

6. Dispositif de réception selon la revendication 5, dans lequel la plaque de base (100) présente un cinquième évidement (110) qui se trouve sous le quatrième évidement (108) de la plaque de couverture (98).

7. Dispositif de réception selon l'une des revendications 1 à 6, dans lequel l'au moins un sixième évidement (112) se prolonge essentiellement sur la totalité de la largeur de l'espace de réception (90, 92, 94, 96).

8. Dispositif de réception selon la revendication 6, dans lequel le sixième évidement (112) touche le cinquième évidement (110).

9. Dispositif de réception selon l'une des revendications précédentes, se composant d'un matériau souple, notamment d'une matière plastique souple.

10. Dispositif de réception selon l'une des revendications précédentes, conçu pour la réception de plusieurs plaques photostimulables (20), dans lequel plusieurs espaces de réception (90, 92, 94, 96) destinés à recevoir les plaques photostimulables (20) sont présents entre la plaque de base (100) et la plaque de couverture (98), et la plaque de couverture (98) présente plusieurs premiers évidements (102) qui se trouvent au-dessus des surfaces des couches photostimulables (22) des plaques photostimulables (20) reçues.

11. Cassette radiographique (12, 42, 50, 78, 82) comportant un dispositif de réception (28, 88, 122) selon l'une des revendications précédentes.

12. Cassette radiographique selon la revendication 11, comportant deux ouvertures (14, 44) obturables par lesquelles il est possible d'introduire le dispositif de réception (28, 88, 122) dans la cassette radiographique (42, 50, 78, 82) et de faire sortir le dispositif de réception (28, 88, 122) se trouvant dans ladite cassette radiographique (42, 50, 78, 82) hors de ladite cassette radiographique (42, 50, 78, 82).

13. Cassette radiographique selon la revendication 12, comportant un organe de fermeture basculant (18) destiné à ouvrir et à fermer l'une des ouvertures (14) de la cassette radiographique (42, 50, 78, 82) et comportant un organe de fermeture basculant, amovible ou coulissant (48, 54, 80) destiné à ouvrir et à fermer l'autre des ouvertures (44) de la cassette radiographique (42, 50, 78, 82).
